# EUROPEAN PATENT APPLICATION

(11) **EP 4 796 364 A1**
(43) Date of publication of application: **26.08.2026**
(21) Application number: 25217614.4
(22) Date of filing: 21.11.2025
(51) Int. Cl.: B60K 35/81

(54) **METHOD AND DEVICE FOR DISPLAYING VEHICLE DATA**

(30) Priority: 25.02.2025 CN 202510213989
(71) Applicant: Xiaomi EV Technology Co., Ltd., Beijing 100176 (CN)
(72) Inventor: YANG, Yajuan, Beijing, 100176 (CN)
(74) Representative: Stöckeler, Ferdinand

(57) **Abstract**

The present invention relates to a method and device for displaying vehicle data. The present invention belongs to the field of an intelligent cockpit technology. The method includes: outputting (S11) a measurement interface corresponding to a first adhesion coefficient, in response to the first adhesion coefficient applicable to a road surface where a vehicle is currently located; determining (S12) current acceleration information of the vehicle; and performing (S13) a comparative displaying on the acceleration information via the measurement interface, where the comparative displaying is configured to prompt a trend of current instability of the vehicle.

## Description

### FIELD

The present invention relates to the field of an intelligent cockpit technology, and particularly relates to a method and device for displaying vehicle data.

### BACKGROUND

In an intelligent cockpit, relevant data of a vehicle can be displayed on a display screen of the intelligent cockpit to improve driving pleasure of a driver. For instance, speed data, power data, energy consumption data, and other vehicle data can be displayed.

### SUMMARY

In order to solve a problem existing in the related art, the present invention provides a method and device for displaying vehicle data, a vehicle, a storage medium, and a program product. The invention is set out in the appended set of claims.

A first aspect of embodiments of the present invention provides a method for displaying vehicle data. The method includes:
outputting a measurement interface corresponding to a first adhesion coefficient, in response to the first adhesion coefficient applicable to a road surface where a vehicle is currently located;
determining current acceleration information of the vehicle; and
performing a comparative display on the acceleration information via the measurement interface, where the comparative display is configured to prompt a trend of current instability of the vehicle.

Optionally, outputting the measurement interface corresponding to the first adhesion coefficient, in response to the first adhesion coefficient applicable to the road surface where the vehicle is currently located includes:
determining a measurement model configured to represent an adhesion coefficient; and
generating the measurement interface corresponding to the first adhesion coefficient via the measurement model, and outputting the measurement interface.

Optionally, generating the measurement interface corresponding to the first adhesion coefficient via the measurement model includes:
determining that a length of the measurement interface is directly proportional to a value of the adhesion coefficient, and determining a length when the adhesion coefficient is a standard road condition adhesion coefficient as a reference.

Optionally, outputting the measurement interface corresponding to the first adhesion coefficient, in response to the first adhesion coefficient applicable to the road surface where the vehicle is currently located includes:
determining that a length of the measurement interface is directly proportional to a value of the adhesion coefficient, and determining a length when the adhesion coefficient is a standard road condition adhesion coefficient as a reference.

Optionally, generating the measurement interface corresponding to the first adhesion coefficient via the measurement model includes:
determining a circular figure as the measurement model configured to represent the adhesion coefficient, where a radius of the circular figure is directly proportional to a value of the adhesion coefficient, and a radius when the adhesion coefficient is a standard road condition adhesion coefficient is determined as a reference.

Optionally, generating the measurement interface corresponding to the first adhesion coefficient via the measurement model includes:
determining a first circle as the measurement interface, where the first circle is generated by using the first adhesion coefficient as a radius.

Optionally, outputting the measurement interface corresponding to the first adhesion coefficient, in response to the first adhesion coefficient applicable to the road surface where the vehicle is currently located includes:
determining a first circle as the measurement interface, where the first circle is generated by using the first adhesion coefficient as the radius.

Optionally, the measurement interface is a circle with preset transparency.

Optionally, performing a comparative display on the acceleration information via the measurement interface includes:
displaying a first flag that represents the acceleration information on the measurement interface, according to the acceleration information; and
performing a comparative display on the first flag and the measurement interface, based on a pre-established association relationship between the measurement interface and the acceleration information.

Optionally, displaying the first flag that represents the acceleration information on the measurement interface, according to the acceleration information includes:
determining a current G value of the vehicle according to the acceleration information; and
flagging a target point based on the G value on the measurement interface as the first flag.

Optionally, the first flag is circular.

Optionally, the pre-established association relationship between the measurement interface and the acceleration information includes:
a central point of the measurement interface coincides with a central point of a coordinate system corresponding to the first flag.

Optionally, the coordinate system is displayed on the measurement interface and includes a lateral direction and a longitudinal direction; or
the coordinate system is not displayed on the measurement interface.

Optionally, the coordinate system is displayed on the measurement interface and includes a lateral direction and a longitudinal direction, and a specific G value is displayed in four directions of the coordinate system.

Optionally, the coordinate system is not displayed on the measurement interface, and the specific G value is displayed in four directions of the coordinate system.

Optionally, the method further includes:
outputting prompt information, in a case where the first flag and a boundary of the measurement interface meet a preset relationship.

Optionally, the preset relationship includes:
the first flag is within the boundary of the measurement interface, and a distance between the boundary and the first flag is less than or equal to a first threshold.

Optionally, the method further includes:
determining a maximum adhesion coefficient of the road surface where the vehicle is currently located; and
determining the first adhesion coefficient applicable to the road surface according to the maximum adhesion coefficient.

Optionally, determining the maximum adhesion coefficient of the road surface where the vehicle is currently located includes:
obtaining, via a server, the maximum adhesion coefficient matched with a current geographical position of the vehicle, based on the current geographical position of the vehicle; or
obtaining the maximum adhesion coefficient of the road surface where the vehicle is currently located, based on sensor data obtained by a sensor of the vehicle.

Optionally, determining the first adhesion coefficient applicable to the road surface according to the maximum adhesion coefficient includes:
determining the maximum adhesion coefficient as the first adhesion coefficient applicable to the road surface; or
determining an adjustment configuration for the adhesion coefficient of the road surface, and obtaining the first adhesion coefficient applicable to the road surface by adjusting the maximum adhesion coefficient according to the adjustment configuration.

Optionally, the adjustment configuration for the adhesion coefficient of the road surface includes at least one of the following:
weather information of a geographical position where the vehicle is currently located, a preset weight coefficient, or vehicle information.

A second aspect of the embodiments of the present invention provides a device for displaying vehicle data. The device for displaying vehicle data includes:
one or more processors; and
a memory that stores processor-executable instructions;
where the processor-executable instructions, when collectively executed by the one or more processors, cause the device to:
output a measurement interface corresponding to a first adhesion coefficient, in response to the first adhesion coefficient applicable to a road surface where a vehicle is currently located;
determine current acceleration information of the vehicle; and
perform a comparative display on the acceleration information via the measurement interface, where the comparative display is configured to prompt a trend of current instability of the vehicle.

A third aspect of the embodiments of the present invention provides a vehicle. The vehicle includes the device for displaying vehicle data described in the second aspect.

A fourth aspect of the embodiments of the present invention provides a non-transitory computer-readable storage medium. The non-transitory computer-readable storage medium stores a computer program. The computer program, when executed by a processor, implements steps of any method described in the first aspect.

A fifth aspect of the embodiments of the present invention provides a computer program product. The computer program product includes a computer program. The computer program, when executed by a processor, implements steps of any method described in the first aspect.

In the solution, in response to the first adhesion coefficient applicable to the road surface where the vehicle is currently located, the measurement interface corresponding to the first adhesion coefficient may be outputted. In addition, the current acceleration information of the vehicle may be determined, and the comparative display may be performed on the acceleration information via the measurement interface. The comparative display is configured to prompt the trend of the current instability of the vehicle. In this way, a user can determine the trend of the current instability of the vehicle by observing the measurement interface and a result of the comparative display of the acceleration information. In this way, driving safety and enjoyment can be improved favorably.

It should be understood that the above general description and the following detailed description are merely illustrative and explanatory, instead of limiting the present invention.

### BRIEF DESCRIPTION OF DRAWINGS

The accompanying drawings here are incorporated in the specification and constitute a part of the specification. The drawings illustrate example conforming to the present invention, and explain principles of the present invention with the description.
FIG. 1 is a flowchart showing a method for displaying vehicle data according to an illustrative embodiment;
FIG. 2 is a flowchart showing the implementation of step S11 according to an illustrative embodiment;
FIG. 3 is a flowchart showing the implementation of step S13 according to an illustrative embodiment;
FIG. 4 is a schematic diagram showing a comparative display of a measurement interface and acceleration information according to an illustrative embodiment;
FIG. 5 is a schematic diagram showing a comparative display of a measurement interface and acceleration information according to an illustrative embodiment;
FIG. 6 is a schematic diagram showing a comparative display of a measurement interface and acceleration information according to an illustrative embodiment;
FIG. 7 is a schematic diagram showing a comparative display of a measurement interface and acceleration information according to an illustrative embodiment;
FIG. 8 is a schematic diagram showing a comparative display of a measurement interface and acceleration information according to an illustrative embodiment;
FIG. 9 is a schematic diagram showing a comparative display of a measurement interface and acceleration information according to an illustrative embodiment; and
FIG. 10 is a block diagram showing a vehicle according to an illustrative embodiment.

### DETAILED DESCRIPTION OF EMBODIMENTS

Example embodiments will be described in detail here and shown in the accompanying drawings illustratively. When the following description involves the accompanying drawings, unless otherwise specified, an identical number in different accompanying drawings denotes identical or similar elements. Implementations described in the following illustrative embodiments do not denote all implementations consistent with the present invention. On the contrary, the implementations are merely instances of a device and a method consistent with some aspects of the present invention as detailed in the appended claims.

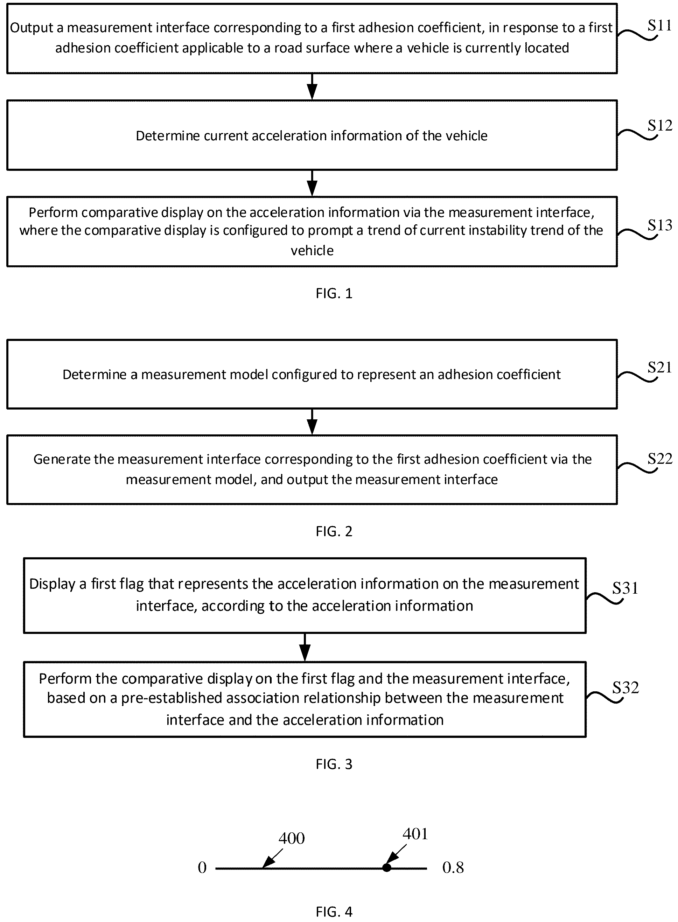

FIG. 1 is a flowchart showing a method for displaying vehicle data according to an illustrative embodiment of the present invention. With reference to FIG. 1, the method includes the following steps S11 to S13.

In step S11, a measurement interface corresponding to a first adhesion coefficient is outputted, in response to the first adhesion coefficient applicable to a road surface where a vehicle is currently located.

In step S12, current acceleration information of the vehicle is determined.

In step S13, a comparative display is performed on the acceleration information via the measurement interface, where the comparative display is configured to prompt a trend of current instability of the vehicle.

In this way, a user can determine the trend of the current instability of the vehicle by observing the measurement interface and a result of the comparative display of the acceleration information. In this way, driving safety and enjoyment can be improved favorably.

Implementations of steps S11 to S13 are illustratively described below.

In step S11, the measurement interface corresponding to the first adhesion coefficient may be outputted, in response to the first adhesion coefficient applicable to the road surface where the vehicle is currently located.

In an implementation, a maximum adhesion coefficient of the road surface where the vehicle is currently located may be determined, and the first adhesion coefficient applicable to the road surface may be determined according to the maximum adhesion coefficient.

In an implementation, based on a current geographical position of the vehicle, the maximum adhesion coefficient matched with the current geographical position may be obtained via a server.

For instance, the vehicle may travel on a target road section, and the vehicle may obtain a maximum adhesion coefficient of the target road section from the server. The server may determine adhesion coefficient information, which is configured to be shared with the vehicle and corresponds to the target road section, according to an adhesion coefficient reference value of the target road section uploaded by each vehicle within a first duration (for instance, one day, one week, etc., which may be set as required). In some scenarios, the server may gradually increase the adhesion coefficient, which is configured to be shared with each vehicle and corresponds to the target road section, to a maximum historical adhesion coefficient of the target road section within a second duration.

In an implementation, based on sensor data obtained by a sensor of the vehicle, the maximum adhesion coefficient of the road surface where the vehicle is currently located may be obtained.

For instance, the vehicle may monitor data such as a tire slip rate and vehicle acceleration according to equipped sensors (such as a wheel speed sensor and an acceleration sensor) to estimate the maximum adhesion coefficient.

In some scenarios, the vehicle may estimate the maximum adhesion coefficient according to a type of a road surface condition (for instance, a dry, slippery, or ice and snow type) in combination with a known empirical adhesion coefficient range.

Based on the obtained maximum adhesion coefficient, the first adhesion coefficient applicable to the road surface where the vehicle is currently located may be determined.

In an implementation, the maximum adhesion coefficient may be determined as the first adhesion coefficient applicable to the road surface. For instance, if the obtained maximum adhesion coefficient is 0.7, 0.7 may be determined as the first adhesion coefficient.

In an implementation, an adjustment configuration for the adhesion coefficient of the road surface may be determined. The first adhesion coefficient applicable to the road surface may be obtained by adjusting the maximum adhesion coefficient according to the adjustment configuration.

As an instance, the adjustment configuration for the adhesion coefficient of the road surface includes weather information about a geographical position where the vehicle is located. In this way, the maximum adhesion coefficient may be adjusted according to the weather information, and the first adhesion coefficient applicable to the road surface may be obtained. For instance, if the weather is sunny, an adjustment coefficient may be set to 1, and a product of the adjustment coefficient and the maximum adhesion coefficient may be determined as the first adhesion coefficient. If the weather is rainy, an adjustment coefficient may be set to 0.7, and a product of the adjustment coefficient and the maximum adhesion coefficient may be determined as the first adhesion coefficient.

As an instance, the adjustment configuration for the adhesion coefficient of the road surface includes a preset weight coefficient. In this way, the maximum adhesion coefficient may be adjusted according to the preset weight coefficient, and the first adhesion coefficient applicable to the road surface may be obtained. For instance, if the preset weight coefficient is 0.5, a product of the weight coefficient and the maximum adhesion coefficient may be determined as the first adhesion coefficient. It should be noted that the weight coefficient may be set as required.

As an instance, the adjustment configuration for the adhesion coefficient of the road surface includes vehicle information. In this way, the maximum adhesion coefficient may be adjusted according to the vehicle information, and the first adhesion coefficient applicable to the road surface may be obtained. For instance, the vehicle information may include a tire type (a snow tire, a summer tire, a winter tire, etc.), tire pressure, a wear degree, and a driving mode (front-wheel drive, rear-wheel drive, or four-wheel drive) to determine an adjustment amount of the adhesion coefficient of the road surface. For instance, the first adhesion coefficient of a severely worn tire on a slippery road surface may be 80% of the maximum adhesion coefficient.

In some implementations, the adjustment configuration may include various elements derived from the weather information about the geographical position where the vehicle is located, the preset weight coefficient, and the vehicle information. For instance, the weather information about the geographical position where the vehicle is located, the preset weight coefficient, and the vehicle information may be included at the same time. In this way, weight coefficients may be set for various elements (the weather information, the preset weight coefficient and the vehicle information) in configuration information, and the weighted fusion may be performed on first adhesion coefficients under the elements to obtain a final first adhesion coefficient.

FIG. 2 is a flowchart showing the implementation of the step S11 according to an illustrative embodiment of the present invention. With reference to FIG. 2, outputting the measurement interface corresponding to the first adhesion coefficient, in response to the first adhesion coefficient applicable to the road surface where the vehicle is currently located, may include the following steps S21 to S22.

In step S21, a measurement model configured to represent an adhesion coefficient is determined.

In step S22, the measurement interface corresponding to the first adhesion coefficient is generated via the measurement model, and the measurement interface is outputted.

In an implementation, an association relationship between the adhesion coefficient and a measurement unit (for instance, a measurement scale) related to the measurement interface may be set. The measurement model may include the association relationship. For instance, the relationship between the adhesion coefficient and the measurement unit may be a one-to-one mapping. In other words, the adhesion coefficient is 0.1, and accordingly, the measurement unit is displayed as 0.1 measurement unit. In an implementation, the adhesion coefficient and the measurement unit may have a mapping relationship of other ratios that may be set as required.

In this way, in step S22, the measurement interface corresponding to the first adhesion coefficient may be generated via the measurement model and outputted.

In an implementation, generating the measurement interface corresponding to the first adhesion coefficient via the measurement model includes:
determining that a length of the measurement interface is directly proportional to a value of the adhesion coefficient, and determining a length when the adhesion coefficient is a standard road condition adhesion coefficient as a reference.

In an implementation, outputting the measurement interface corresponding to the first adhesion coefficient, in response to the first adhesion coefficient applicable to the road surface where the vehicle is currently located, includes: determining that a length of the measurement interface is directly proportional to a value of the adhesion coefficient, and determining a length when the adhesion coefficient is a standard road condition adhesion coefficient as a reference.

As an instance, the measurement interface may include a measurement axis. The length of the measurement interface is directly proportional to the value of the adhesion coefficient. The length when the adhesion coefficient is the standard road condition adhesion coefficient is determined as the reference.

In an implementation, the measurement axis may be established with zero as a start point and the maximum adhesion coefficient as an end point. A length of the measurement axis is directly proportional to the value of the adhesion coefficient. The length when the adhesion coefficient is the standard road condition adhesion coefficient is determined as the reference. For instance, when the adhesion coefficient is the standard road condition adhesion coefficient, the length of the measurement axis is A. In this way, when the first adhesion coefficient is less than the standard road condition adhesion coefficient (for instance, 0.5 times the standard road condition adhesion coefficient), the length of the measurement axis may be less than A (for instance, 0.5A). When the first adhesion coefficient is greater than the standard road condition adhesion coefficient (for instance, 1.5 times the standard road condition adhesion coefficient), the length of the measurement axis may be greater than A (for instance, 1.5A).

In an implementation, considering that the acceleration information of the vehicle may include lateral acceleration and longitudinal acceleration, a plurality of the measurement axes (or the measurement interfaces) may be included. For instance, a first measurement interface and a second measurement interface may be generated. The first measurement interface is configured to perform the comparative display with the lateral acceleration information. The second measurement interface is configured to perform the comparative display with longitudinal acceleration information.

In an implementation, generating the measurement interface corresponding to the first adhesion coefficient via the measurement model includes:
determining a circular figure as the measurement model configured to represent the adhesion coefficient. A radius of the circular figure is directly proportional to the value of the adhesion coefficient, and a radius when the adhesion coefficient is the standard road condition adhesion coefficient is determined as the reference.

For instance, when the adhesion coefficient is the standard road condition adhesion coefficient, the radius of the circular figure is B. In this way, when the adhesion coefficient is less than the standard road condition adhesion coefficient (for instance, 0.8 times the standard road condition adhesion coefficient), the radius of the circular figure may be less than B (for instance, 0.8B). When the adhesion coefficient is greater than the standard road condition adhesion coefficient (for instance, 1.2 times the standard road condition adhesion coefficient), the radius of the circular figure may be greater than B (for instance, 1.2B).

In an implementation, generating the measurement interface corresponding to the first adhesion coefficient via the measurement model includes:
determining a first circle as the measurement interface, where the first circle is generated by using the first adhesion coefficient as the radius.

In an implementation, outputting the measurement interface corresponding to the first adhesion coefficient, in response to the first adhesion coefficient applicable to the road surface where the vehicle is currently located, includes: determining a first circle as the measurement interface, where the first circle is generated by using the first adhesion coefficient as the radius.

For instance, if the adhesion coefficient is 0.7, a first circle with a radius of 0.7 may be generated, and the first circle may be determined as the measurement interface. For instance, if the adhesion coefficient is 0.5, a first circle with a radius of 0.5 may be generated, and the first circle may be determined as the measurement interface.

In an implementation, the measurement interface is a circle with preset transparency. The preset transparency may be set based on the requirements of the user. As an example, the preset transparency may be 0% to 70%.

Still, with reference to FIG. 1, in step S12, the current acceleration information of the vehicle is determined.

For instance, the acceleration information may include at least one of the lateral acceleration or the longitudinal acceleration of the vehicle.

In Step S13, the comparative display is performed on the acceleration information via the measurement interface, where the comparative display is configured to prompt the trend of the current instability of the vehicle.

FIG. 3 is a flowchart showing the implementation of the step S13 according to an illustrative embodiment of the present invention. With reference to FIG. 3, performing the comparative display on the acceleration information via the measurement interface includes the following steps S31 to S32.

In step S31, a first flag that represents the acceleration information on the measurement interface is displayed according to the acceleration information.

In step S32, the comparative display is performed on the first flag and the measurement interface, based on a pre-established association relationship between the measurement interface and the acceleration information.

In an implementation, displaying the first flag that represents the acceleration information on the measurement interface, according to the acceleration information, includes:
determining a current G value of the vehicle according to the acceleration information.

A target point is flagged as the first flag based on the G value on the measurement interface.

For instance, the acceleration information may include an instantaneous acceleration value of the vehicle in a state such as acceleration, deceleration, or turning. The instantaneous acceleration value is measured by an acceleration sensor in the vehicle. In this way, the instantaneous acceleration value may be compared with a standard gravity acceleration g (for instance, 9.81 m/s²). Thus, a ratio of the instantaneous acceleration value to g may be determined as the G value.

In this way, the target point may be flagged as the first flag based on the G value on the measurement interface.

In an implementation, the first flag is circular. In an implementation, the first flag may have other shapes, such as a triangle, which is not limited to the embodiments of the present invention.

FIG. 4 is a schematic diagram showing a comparative display of the measurement interface and the acceleration information according to an illustrative embodiment of the present invention. With reference to FIG. 4, the measurement interface may include a measurement axis 400 with a starting point of 0 and an ending point of 0.8. The length of the measurement axis may be determined according to the first adhesion coefficient. For instance, a one-to-one mapping relationship may be set between a value of the first adhesion coefficient and the length of the measurement axis. Thus, if the first adhesion coefficient is 0.8, the measurement axis 400 shown in FIG. 4 may be generated.

In addition, a target point may be flagged as a first flag 401 based on a G value on the measurement interface. For instance, in some implementations, the pre-established association relationship between the measurement interface and the acceleration information includes: the measurement axis of the first adhesion coefficient is determined as the measurement axis of the G value. In this way, if the G value of the vehicle is 0.6, the first flag 401 may be generated at a scale position of 0.6 in the measurement axis 400.

In this way, the user may observe a distance between the first flag 401 and the ending point of the measurement axis. The closer the first flag 401 is to the ending point of the measurement axis, the greater the adhesion used by the vehicle, and the closer the vehicle is to an unstable state. In this way, the comparative display is performed on the measurement interface and the acceleration information, the user can perceive a vehicle state favorably, and the driving safety can be improved favorably.

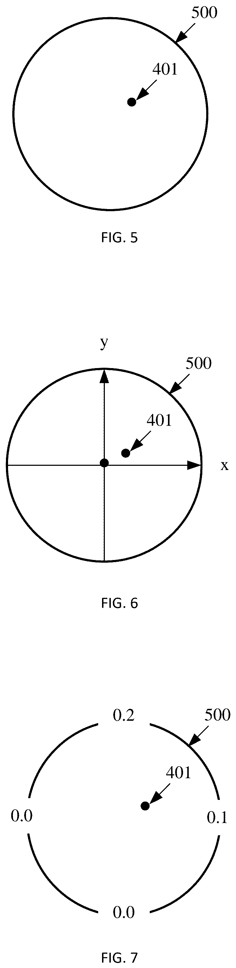

FIG. 5 is a schematic diagram showing a comparative display of the measurement interface and the acceleration information according to an illustrative embodiment of the present invention. With reference to FIG. 5, the measurement interface may include a first circle 500. A radius of the first circle 500 may be, for instance, a value of the first adhesion coefficient.

In this way, the target point may be flagged as the first flag 401 based on the G value on the measurement interface. For instance, in an implementation, a coordinate system may be established. The coordinate system includes a horizontal coordinate axis for measuring a lateral G value and a longitudinal coordinate axis for measuring a longitudinal G value. In this way, the first flag 401 corresponding to the G value may be determined in the coordinate system according to the lateral G value and the longitudinal G value of the vehicle.

In this way, the comparative display may be performed on the first flag and the measurement interface based on the pre-established association relationship between the measurement interface and the acceleration information.

The association relationship may be set as required. As an instance, the association relationship may include a mapping relationship between the acceleration information and a measurement unit of the measurement interface. For instance, acceleration of 0.5G may be mapped to a scale of 0.5 in the measurement interface (which may be another value according to a change of the mapping relationship). In this way, the comparative display may be performed on the first flag and the measurement interface based on the pre-established association relationship between the measurement interface and the acceleration information.

In an implementation, the pre-established association relationship between the measurement interface and the acceleration information includes:
a central point of the measurement interface coincides with a central point of a coordinate system corresponding to the first flag.

FIG. 6 is a schematic diagram showing a comparative display of the measurement interface and the acceleration information according to an illustrative embodiment of the present invention. With reference to FIG. 6, a position of a center of the first circle 500 may be set as an origin of a horizontal coordinate axis X and a longitudinal coordinate axis Y, and a coordinate at the origin may be set to 0. In this way, a horizontal position corresponding to the G value in the coordinate system may be determined according to a lateral G value, and a longitudinal position corresponding to the G value in the coordinate system may be determined according to a longitudinal G value. In this way, a first flag 401 corresponding to the G value may be determined in the coordinate system according to the lateral position and the longitudinal position.

In this way, the user may observe a distance relationship between the first flag 401 and a boundary of the first circle. The closer the first flag 401 is to the boundary of the first circle, the greater the adhesion used by a vehicle, and the closer the vehicle is to the unstable state. In this way, the comparative display is performed on the measurement interface, and the acceleration information and driving safety can be improved favorably.

A coordinate axis and the coordinate system may be configured to be displayed or not as required. With reference to FIG. 5, in an implementation, the coordinate system is not displayed on the measurement interface. With reference to FIG. 6, in another implementation, the coordinate system is displayed on the measurement interface and includes a lateral direction and a longitudinal direction.

In addition, FIG. 7 is a schematic diagram showing a comparative display of the measurement interface and the acceleration information according to an illustrative embodiment of the present invention. With reference to FIG. 7, in an implementation, the coordinate system is not displayed on the measurement interface. A specific G value is displayed in four directions of the coordinate system.

As an instance, an upper G value may be a G value generated by longitudinal acceleration of the vehicle, a lower G value may be a G value generated by longitudinal deceleration of the vehicle, a left G value may be a G value generated by leftward lateral acceleration of the vehicle, and a right G value may be a G value generated by rightward lateral acceleration of the vehicle.

In this way, the comparative display is performed on the measurement interface and the acceleration information, and the specific G value is displayed in four directions, such that the user can conveniently observe the driving state of the vehicle.

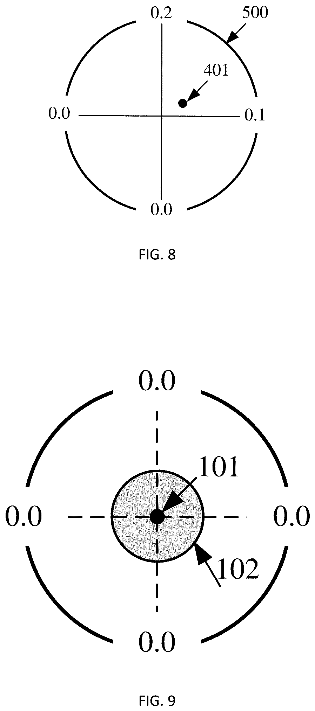

FIG. 8 is a schematic diagram showing a comparative display of the measurement interface and the acceleration information according to an illustrative embodiment of the present invention. With reference to FIG. 8, in an implementation, the coordinate system is displayed on the measurement interface and includes the lateral direction and the longitudinal direction. A specific G value is displayed in four directions of the coordinate system.

In this way, the comparative display is performed on the measurement interface and the acceleration information, and the specific G value is displayed in four directions, such that the user can conveniently observe the driving state of the vehicle.

FIG. 9 is a schematic diagram of the comparative display of the measurement interface and the acceleration information according to an example of the present invention. With reference to FIG. 9, in an implementation, the comparative display may be performed on the measurement interface and the acceleration information in a G-value table.

In an intelligent cockpit, relevant data of the vehicle may be displayed on a display screen of the intelligent cockpit to improve driving pleasure of a driver. For instance, speed data, power data, energy consumption data, and other data of the vehicle can be displayed.

With reference to FIG. 9, the G-value table may be displayed in the intelligent cockpit. A G value of the vehicle may be determined according to the driving state of the vehicle, and a target point of the G value in the G-value table may be determined. As an instance, when a lateral G value and a longitudinal G value of the vehicle are 0, a target point 101 of the G value in the G-value table may be determined. It should be understood that different G values may appear when the vehicle is in different driving states, so the position of the target point 101 may change with the driving state of the vehicle. For instance, the position of the target point 101 may be determined by the longitudinal acceleration and the lateral acceleration of the vehicle. The longitudinal acceleration controls the target point 101 to move vertically, and the lateral acceleration controls the target point 101 to move laterally.

With reference to FIG. 9, a first circle 102 may be displayed in the G-value table. The first circle 102 may be determined as the measurement interface, and has a certain transparency. The transparency may be set as required. For a method for generating the first circle 102 refer may be made to the description in the above embodiments. For the sake of brevity in the description, the embodiments of the present invention will not elaborate on this.

In this way, the measurement interface and the acceleration information are displayed in the G-value table in a comparative manner, such that the user can conveniently observe the driving state of the vehicle, and the driving safety can be improved.

In an implementation, the method further includes:
outputting prompt information, in a case where the first flag and a boundary of the measurement interface meet a preset relationship.

As an instance, the preset relationship includes:
the first flag is within the boundary of the measurement interface, and a distance between
the boundary and the first flag is less than or equal to a first threshold.

The first threshold may be set as required. As an instance, the first threshold may be [0, x), and x is the first adhesion coefficient.

With FIG. 8 as an instance, a target distance may be obtained by determining a distance between the first flag and the boundary.

In a case where the target distance is less than or equal to the first threshold, the first prompt information is outputted. It should be noted that when the target distance gradually decreases, it may be determined that the G value is close to the maximum adhesion coefficient. The road holding ability of the vehicle is close to the limit. Thus, in a case where the target distance is less than or equal to the first threshold, the first prompt information may be outputted.

For instance, the first safety prompt information may be configured to prompt the user that the vehicle may become unstable and slip. The first safety prompt information may be presented in the form of text, a notification message, light, voice, etc., or a combination of the presentation modes.

In an implementation, the display mode of the first flag may be determined according to the distance.

For instance, if the first flag is located in the first circle, the first mode is determined as the displaying mode of the first flag.

If the first flag is located outside the first circle, a second mode is determined as the displaying mode of the first flag.

As an instance, the first mode is configured to display the first flag in green. In this case, the G value of the vehicle does not exceed the maximum adhesion coefficient, and the road holding ability of the vehicle does not exceed the limit of the road holding ability. Thus, the first flag is displayed in green, and the user may be prompted that the current driving state of the vehicle is still within a relatively controllable range.

If the first flag is located outside the first circle, the second mode may be determined as the displaying mode of the first flag. As an instance, the second mode is configured to display the first flag in red. In this case, the road holding ability of the vehicle exceeds the limit of the road holding ability. Thus, the first flag is displayed in red so the user can be prompted that the vehicle may be unstable and that violent operation should be avoided.

In an possible implementation, if it is determined that the first flag is located in the first circle, the first flag may be displayed in different display modes. For instance, if the distance is greater than or equal to 0 and less than a first distance threshold, a first sub-mode is determined as a displaying mode of the first flag.

If the distance is greater than or equal to the first distance threshold and less than a second distance threshold, a second sub-mode is determined as the displaying mode of the first flag.

The first sub-mode and the second sub-mode are configured to display the first flag in different colors (or shapes).

It should be understood that the first distance threshold is less than the second distance threshold, and the first distance threshold and the second distance threshold may be set as required.

An embodiment of the present invention further provides a device for displaying vehicle data. The device for displaying vehicle data is configured to perform the method for displaying vehicle data according to any one of the embodiments of the present invention.

An embodiment of the present invention provides a vehicle. The vehicle includes a device for displaying vehicle data provided by the embodiments of the present invention.

An embodiment of the present invention provides a non-transitory computer-readable storage medium storing a computer program. The computer program, when executed by a processor, implements steps of the method for displaying vehicle data according to any one of the embodiments of the present invention.

An embodiment of the present invention provides a computer program product. The computer program product includes a computer program. The computer program, when executed by a processor, implements steps of the method for displaying vehicle data according to any one of the embodiments of the present invention.

For the device for displaying vehicle data in the embodiments, a specific method for the processor to execute an operation is described in detail in the embodiments relating to the method for displaying vehicle data, which will not be repeated here.

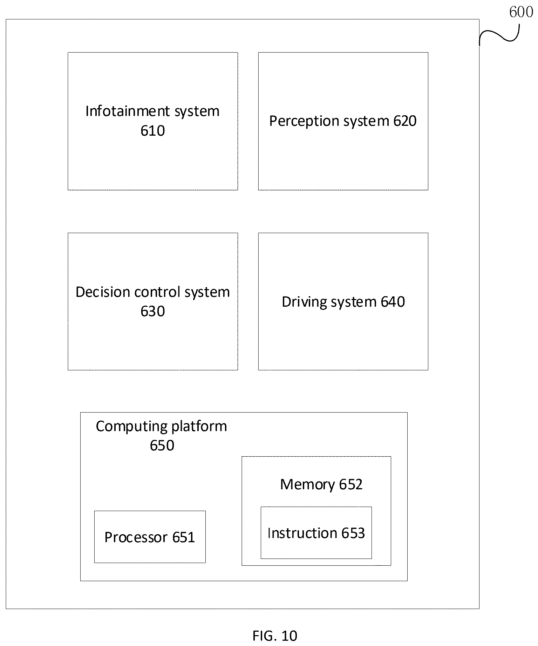

FIG. 10 is a block diagram showing a vehicle 600 according to an illustrative embodiment. For instance, the vehicle 600 may be a hybrid vehicle, a non-hybrid vehicle, an electric vehicle, a fuel cell vehicle, or other types of vehicles. The vehicle 600 may be an autonomous vehicle, a semi-autonomous vehicle, or a non-autonomous vehicle.

With reference to FIG. 10, the vehicle 600 may include various sub-systems, such as an infotainment system 610, a perception system 620, a decision control system 630, a driving system 640, and a computing platform 650. The vehicle 600 may further include more or fewer sub-systems, and each sub-system may include a plurality of components. In addition, each sub-system and each component of the vehicle 600 may be interconnected in a wired or wireless mode.

In some embodiments, the infotainment system 610 may include a communication system, an entertainment system, a navigation system, etc.

The perception system 620 may include several sensors for sensing information about the environment around the vehicle 600. For instance, the perception system 620 may include a global positioning system (the global positioning system may be a GPS, a BeiDou system, or another positioning system), an inertial measurement unit (IMU), a laser radar, a millimeter-wave radar, an ultrasonic radar, and a photographing device.

The decision control system 630 may include a computing system, a vehicle controller, a steering system, a throttle, and a brake system.

The driving system 640 may include components that provide power for the movement of the vehicle 600. In an embodiment, the driving system 640 may include an engine, an energy source, a transmission system, and wheels. The engine may be one or a combination of an internal combustion engine, an electric motor, and an air compression engine. The engine may convert energy provided by the energy source into mechanical energy.

Some or all functions of the vehicle 600 are controlled by the computing platform 650. The computing platform 650 may include at least one processor 651 and a memory 652. The processor 651 may execute instructions 653 stored in the memory 652.

The processor 651 may be any conventional processor, such as a central processing unit (CPU) that is commercially available. The processor may also include, for instance, a graphics processing unit (GPU), a field programmable gate array (FPGA), a system on chip (SOC), an application-specific integrated circuit (ASIC), or a combination of them.

The memory 652 may be implemented by any volatile or nonvolatile memory device or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

In addition to the instructions 653, the memory 652 may further store data, such as a road map, route information, a vehicle position, direction, speed, and other data. The data stored in the memory 652 may be used by the computing platform 650.

In this embodiment of the present invention, processor 651 may execute instructions 653 to complete all or some of the steps in the above methods for displaying vehicle data.

As used herein, the term processor may refer to one processor that performs the defined functions or a plurality of processors that collectively perform defined functions, such that the execution of the individual defined functions may be divided amongst such processors.

Further, the word "illustrative" is used here to indicate an example, an instance, and a diagram. Any aspect or design described here as "illustrative" is not necessarily understood as advantageous over other aspects or designs. On the contrary, words are used to present concepts in a concrete way, illustratively. As used here, the term "or" is intended to indicate inclusive "or" rather than exclusive "or". Unless otherwise specified or clearly stated in the context, "X is applied to A or B" is intended to indicate any one of the natural, inclusive arrangements. That is, if X is applied to A, X is applied to B, or X is applied to both A and B, "X is applied to A or B" satisfies any one of the above instances. In addition, the articles "a," "an," and "one" as used in the present invention and the appended claims are generally understood to indicate "one or more" unless otherwise specified or clearly pointed out from the context.

Likewise, although the present invention is shown and described with respect to one or more implementations, those skilled in the art could conceive of equivalent variations and modifications after reading and understanding the description and the accompanying drawings. The present invention includes all such modifications and variations, and is limited only by the scope of the claims. For various functions executed by the components, unless otherwise indicated, the terms used for describing such components are intended to correspond to any component (functionally equivalent) that performs a specified function of the described component, even if the component is not structurally equivalent to the disclosed structure. In addition, although a particular feature of the present invention can be disclosed with respect to only one of several implementations, such a feature can be combined with one or more other features of other implementations as desired and advantageous for any given or specific application. Further, the terms "include," "comprise," "have," "with" or their variations used in specific implementations or claims are intended to be inclusive, like the term "encompass".

It should be understood that the present invention is not limited to the precise structure described above and illustrated in the accompanying drawings. It can be subjected to various modifications and changes without departing from the scope. The scope of the present invention is limited merely by the appended claims.

It should be understood that features of various embodiments of the present invention described here can be combined with each other unless otherwise specified. As used here, the term "and/or" includes any one of the related listed items and any combination of any two or more of the related listed items. Similarly, "at least one of ..." includes any one of the related listed items and any combination of any two or more of the related listed items.

Although the terms "first," "second," and "third" can be used here to describe various modules, the modules are not limited to these terms. On the contrary, the terms are only used to distinguish between modules. Thus, a first module mentioned in the instances described here can also be referred to as a second module without departing from the teaching of each instance. In addition, the terms "first" and "second" are merely for descriptive purposes and are not to be construed as indicating or implying their relative importance or implicitly specifying the number of indicated technical features. Thus, a feature defined with "first" and "second" can explicitly or implicitly include at least one of the features. In the description, "a plurality of" indicates at least two, and for instance, two or three, unless expressly specified otherwise.

## Claims

1. A method for displaying vehicle data, comprising:
outputting (S11) a measurement interface corresponding to a first adhesion coefficient, in response to the first adhesion coefficient applicable to a road surface where a vehicle is currently located;
determining (S12) current acceleration information of the vehicle; and
performing (S13) a comparative display on the acceleration information via the measurement interface, wherein the comparative display is configured to prompt a trend of current instability of the vehicle.

2. The method according to claim 1, wherein outputting (S11) the measurement interface corresponding to the first adhesion coefficient, in response to the first adhesion coefficient applicable to the road surface where the vehicle is currently located comprises:
determining (S21) a measurement model configured to represent an adhesion coefficient; and
generating (S22) the measurement interface corresponding to the first adhesion coefficient via the measurement model, and outputting the measurement interface.

3. The method according to claim 1, wherein outputting (S11) the measurement interface corresponding to the first adhesion coefficient, in response to the first adhesion coefficient applicable to the road surface where the vehicle is currently located comprises:
determining that a length of the measurement interface is directly proportional to a value of the adhesion coefficient, and
determining a length when the adhesion coefficient is a standard road condition adhesion coefficient as a reference.

4. The method according to claim 2, wherein generating (S22) the measurement interface corresponding to the first adhesion coefficient via the measurement model comprises:
determining a circular figure as the measurement model configured to represent the adhesion coefficient, wherein a radius of the circular figure is directly proportional to a value of the adhesion coefficient, and a radius when the adhesion coefficient is a standard road condition adhesion coefficient is determined as a reference.

5. The method according to claim 1, wherein outputting (S11) the measurement interface corresponding to the first adhesion coefficient, in response to the first adhesion coefficient applicable to the road surface where the vehicle is currently located comprises:
determining a first circle as the measurement interface, wherein the first circle (500, 102) is generated by using the first adhesion coefficient as a radius.

6. The method according to any one of claims 1 to 5, wherein performing (S13) the comparative display on the acceleration information via the measurement interface comprises:
displaying (S31) a first flag (401) that represents the acceleration information on the measurement interface, according to the acceleration information; and
performing (S32) the comparative display on the first flag (401) and the measurement interface, based on a pre-established association relationship between the measurement interface and the acceleration information.

7. The method according to claim 6, wherein displaying (S31) the first flag (401) that represents the acceleration information on the measurement interface, according to the acceleration information comprises:
determining a current G value of the vehicle according to the acceleration information; and
flagging a target point (101) based on the G value on the measurement interface as the first flag (401).

8. The method according to claim 6, wherein the pre-established association relationship between the measurement interface and the acceleration information comprises:
a central point of the measurement interface coincides with a central point of a coordinate system corresponding to the first flag (401).

9. The method according to claim 8, wherein the coordinate system is displayed on the measurement interface and comprises a lateral direction and a longitudinal direction; or
the coordinate system is not displayed on the measurement interface.

10. The method according to claim 8, wherein the coordinate system is displayed on the measurement interface and comprises a lateral direction and a longitudinal direction; and
a specific G value is displayed in four directions of the coordinate system.

11. The method according to claim 8, wherein the coordinate system is not displayed on the measurement interface, and a specific G value is displayed in four directions of the coordinate system.

12. The method according to any one of claims 1 to 11, further comprising:
determining a maximum adhesion coefficient of the road surface where the vehicle is currently located; and
determining the first adhesion coefficient applicable to the road surface according to the maximum adhesion coefficient.

13. The method according to claim 12, wherein determining the maximum adhesion coefficient of the road surface where the vehicle is currently located comprises:
obtaining, via a server, the maximum adhesion coefficient matched with a current geographical position of the vehicle, based on the current geographical position of the vehicle; or
obtaining the maximum adhesion coefficient of the road surface where the vehicle is currently located, based on sensor data obtained by a sensor of the vehicle.

14. The method according to claim 12, wherein determining the first adhesion coefficient applicable to the road surface according to the maximum adhesion coefficient comprises:
determining the maximum adhesion coefficient as the first adhesion coefficient applicable to the road surface; or
determining an adjustment configuration for the adhesion coefficient of the road surface, and obtaining the first adhesion coefficient applicable to the road surface by adjusting the maximum adhesion coefficient according to the adjustment configuration.

15. A device for displaying vehicle data, comprising:
one or more processors; and
a memory that stores processor-executable instructions;
wherein the processor-executable instructions, when collectively executed by the one or more processors, cause the device to:
output a measurement interface corresponding to a first adhesion coefficient, in response to the first adhesion coefficient applicable to a road surface where a vehicle is currently located;
determine current acceleration information of the vehicle; and
perform a comparative display on the acceleration information via the measurement interface, wherein the comparative display is configured to prompt a trend of current instability of the vehicle.
